# EUROPÄISCHE PATENTSCHRIFT

(11) **EP 4 163 625 B1**
(45) Veröffentlichungstag und Bekanntmachung des Hinweises auf die Patenterteilung: **18.06.2025**
(21) Anmeldenummer: 22200013.5
(22) Anmeldetag: 06.10.2022
(51) Int. Cl.: G01N 21/94, B08B 5/04, B65H 15/00, B08B 11/00, B08B 1/30, B08B 1/34, H01M 4/88, G01N 21/84

(54) **VORRICHTUNG UND VERFAHREN ZUR REINIGUNG UND/ODER INSPEKTION EINER FUNKTIONALEN SCHICHT**
DEVICE AND METHOD FOR CLEANING AND/OR INSPECTING A FUNCTIONAL LAYER
DISPOSITIF ET PROCÉDÉ DE NETTOYAGE ET/OU D'INSPECTION D'UNE COUCHE FONCTIONNELLE

(30) Priorität: 08.10.2021 DE 102021211386
(43) Veröffentlichungstag der Anmeldung: 12.04.2023
(73) Patentinhaber: OPTIMA life science GmbH, 74523 Schwäbisch Hall (DE)
(72) Erfinder: Jansen, Johannes, 74545 Michelfeld (DE)
(74) Vertreter: Patentanwälte Ruff, Wilhelm, Beier, Dauster & Partner mbB

(56) Entgegenhaltungen:
- CN-A- 111 153 249
- CN-A- 111 570 353

## Beschreibung

### ANWENDUNGSGEBIET UND STAND DER TECHNIK

Die Erfindung betrifft eine Vorrichtung und ein Verfahren zur Reinigung und Inspektion einer funktionalen Schicht, insbesondere einer funktionalen Schicht für eine Brennstoffzelle.

Zentrales Element von Brennstoffzellen sind als Membranelektrodenanordnungen (kurz MEA; engl. "membrane electrode assembly") bezeichnete Membran-Baugruppen. Eine MEA umfasst typischerweise eine katalysatorbeschichtete Membran (kurz CCM für engl. "catalyst coated membrane") sowie zwei als Kathode und Anode gestaltete Elektroden, zwischen welchen die Membran angeordnet ist. Eine MEA umfasst weiter zwei Gasdiffusionslagen (kurz GDL), die an den der Membran abgewandten Seiten der Elektroden angeordnet sind. Die GDL und die Elektroden sind in einer Ausgestaltung als ein Verbund gestaltet. Eine Brennstoffzelle kann durch eine Vielzahl im Stapel angeordneter Membranelektrodenanordnungen aufgebaut werden, deren elektrische Leistungen sich addieren.

Weiter sind Membran-Baugruppen mit funktionalen Schichten für andere Anwendungen bekannt, beispielsweise für eine Flüssigbatterie (Redox-Flow-Batterie) und/oder Membranbasierte Luftbefeuchter.

Eine Gasdiffusionslage, eine Gasdiffusionslage im Verbund mit einer Elektrode, eine Katalysatorschicht, eine Membran, eine katalysatorbeschichtete Membran oder eine katalysatorbeschichtete Membrane im Verbund mit einem Polymerfilm werden im Zusammenhang mit der Anmeldung allgemein als funktionale Schicht bezeichnet. Die Aufzählung ist nicht abschließend und alternative funktionale Schichten sind denkbar.

Es ist bekannt, ein Material für diese funktionale Schichten als Rollenware bereitzustellen, wobei je nach Anwendungsfall eine bahnförmige Verarbeitung erfolgt oder Zuschnitte aus der Rollenware herausgetrennt werden, wobei eine Verarbeitung der funktionalen Schicht als Zuschnitt erfolgt. Vor einer Verarbeitung des Zuschnitts ist es bekannt, diesen für eine Verarbeitung durch eine Reinigung und eine Inspektion vorzubereiten.

Für andere Fachgebiete ist beispielsweise aus CN 111 153 249 A eine Vorrichtung bekannt, mittels welcher ein beidseitiger Testdruck bei einer Druckerherstellung ausgewertet wird, wobei die Vorrichtung eine Wendeeinrichtung umfasst.

Aus CN 111 570 353 A ist eine Reinigungseinrichtung für Computerhardware bekannt.

### AUFGABE UND LÖSUNG

Es ist eine Aufgabe der Erfindung, eine Vorrichtung und ein Verfahren zur Reinigung und Inspektion einer funktionalen Schicht in Form eines Zuschnitts zu schaffen.

Gemäß einem ersten Aspekt wird eine Vorrichtung zur Reinigung und Inspektion einer funktionalen Schicht mit einer ersten Seite und einer zweiten Seite geschaffen, umfassend eine linear hin- und herbewegbare Reinigungs- und Inspektionseinheit zur Reinigung und/oder Inspektion der funktionalen Schicht, eine erste Vakuumplatte, wobei die funktionale Schicht mit der zweiten Seite auf einer Oberfläche der ersten Vakuumplatte anordenbar ist, sodass die erste Seite der funktionalen Schicht für eine Reinigung und/oder Inspektion frei liegt, und eine zweite Vakuumplatte, wobei die funktionale Schicht mit der ersten Seite auf einer Oberfläche der zweiten Vakuumplatte anordenbar ist, sodass die zweite Seite der funktionalen Schicht für eine Reinigung und/oder Inspektion frei liegt, wobei die Oberfläche der ersten Vakuumplatte und die Oberfläche der zweiten Vakuumplatte in einer jeweiligen Arbeitsposition die gleiche Orientierung aufweisen, wobei die erste Vakuumplatte und/oder die zweite Vakuumplatte derart verschwenkbar gelagert ist/sind, dass für einer Übergabe der funktionalen Schicht von der ersten Vakuumplatte an die zweite Vakuumablage die Oberflächen einander gegenüberliegend anordenbar sind, und wobei die Reinigungs- und Inspektionseinheit zur Reinigung und/oder Inspektion der ersten Seite der an der ersten Vakuumplatte angeordneten funktionalen Schicht in eine erste Richtung entlang der ersten Vakuumplatte und entlang der zweiten Vakuumplatte in eine Endlage und zur Reinigung und/oder Inspektion der zweiten Seite, der an der zweiten Vakuumplatte angeordneten funktionalen Schicht in eine der ersten Richtung entgegengesetzte zweite Richtung entlang der zweiten Vakuumplatte und entlang der erstem Vakuumplatte bewegbar ist.

Die Begriffe "ein", "einer" etc. werden im Zusammenhang mit der Anmeldung als unbestimmte Artikel und nicht als Zählwörter verwendet. Ebenso dienen die Begriffe "erster" und "zweiter" in Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen.

Als Vakuumplatte oder auch Vakuumtisch wird eine Auflage bezeichnet, an welcher durch Unterdruck Bauteile fixiert werden können. Die Vakuumplatte weist zu diesem Zweck eine luftdurchlässige Ablagefläche auf, wobei eine Luftdurchlässigkeit je nach Anwendungsfall mittels Durchbrüchen, poröser Materialien und/oder auf andere Weise realisierbar ist. Die erste und die zweite Vakuumplatte werden zusammen auch verkürzt als Vakuumplatten bezeichnet.

Als Arbeitsposition der Vakuumplatten wird eine Anordnung der Vakuumplatten bezeichnet, in welcher eine Reinigung und/oder Inspektion einer an der Vakuumplatte gehaltenen funktionalen Schicht erfolgt.

In ihrer jeweiligen Arbeitsposition weisen die Oberflächen der Vakuumplatten gemäß der Anmeldung die gleiche Orientierung auf. Als gleiche Orientierung wird dabei eine Anordnung von zwei Flächen bezeichnet, bei welcher Normalvektoren der Flächen - ggf. mit einer herstellüblichen Toleranz - parallel sind und in die gleiche Richtung weisen. Die gleiche Orientierung der Oberflächen in den Arbeitspositionen erlaubt eine manuelle und/oder automatisierte Reinigung und/oder Inspektion von einer Seite der Vorrichtung, insbesondere eine automatisierte Reinigung und/oder Inspektion mittels einer Einrichtung, welche gegenüberliegend der Oberflächen für die Reinigung und/oder Inspektion angeordnet ist. Dadurch kann auf zwei an gegenüberliegenden Seiten angeordnete Einrichtungen zur Reinigung und/oder Inspektion der ersten bzw. der zweiten Seite der funktionalen Schicht verzichtet werden. In Ausgestaltungen der Vorrichtung sind gleichwohl zwei oder mehr Einrichtungen vorgesehen, mittels welcher eine der Seiten der funktionalen Schicht parallel oder seriell bearbeitbar ist.

Um die funktionale Schicht von der ersten Vakuumplatte an die zweite Vakuumplatte zu übergeben, ist eine Vakuumplatte oder sind beide Vakuumplatten verschwenkbar gelagert, sodass die Oberflächen für eine Übergabe einander gegenüberliegend anordenbar sind. In vorteilhaften Ausgestaltungen sind die Oberflächen für die Übergabe einander gegenüberliegend parallel angeordnet, wobei je nach Anwendungsfall die Oberflächen aneinander anliegen oder zwischen den Oberflächen ein Spalt verbleibt. Sofern ein Spalt verbleibt, ist dessen Größe derart gewählt, dass eine sichere Übergabe gewährleistet ist. In einer Ausgestaltung entspricht ein Spaltmaß einer Materialdicke der funktionalen Schicht. Dabei ist in einer Ausgestaltung ein Spaltmaß einstellbar für eine Anpassung an unterschiedliche funktionale Schichten. In einer Ausgestaltung sind die Vakuumplatten nebeneinander angeordnet, sodass zwei einander zugewandte Kanten der Vakuumplatten parallel angeordnet sind, wobei zumindest eine der Vakuumplatten um eine zwischen den Vakuumplatten angeordnete, parallel zu den einander zugewandten Kanten verlaufende Schwenkachse verschwenkbar ist.

Die Reinigungs- und Inspektionseinheit ist entlang der ersten Vakuumplatte zur Reinigung und/oder Inspektion der ersten Seite der an der ersten Vakuumplatte angeordneten funktionalen Schicht und entlang der zweiten Vakuumplatte zur Reinigung und/oder Inspektion der zweiten Seite der an der zweiten Vakuumplatte angeordneten funktionalen Schicht bewegbar. Die Reinigungs- und Inspektionseinheit ist in einer Ausgestaltung verschieblich gelagert. In anderen Ausgestaltungen weist die Reinigungs- und Inspektionseinheit Rollen auf, mittels welcher sie verfahrbar ist.

Die Reinigungs- und Inspektionseinheit wird dabei in einer Ausgestaltung in der ersten Richtung und der zweiten Richtung parallel zu einer Schwenkachse entlang der Vakuumplatten bewegt, wobei die Reinigungs- und Inspektionseinheit zwischen einer Bewegung entlang der ersten Vakuumplatte und einer Bewegung entlang der zweiten Vakuumplatte zusätzlich quer zu der ersten Richtung und der zweiten Richtung versetzt wird. In anderen Ausgestaltungen wird die Reinigungs- und Inspektionseinheit in der ersten Richtung und der zweiten Richtung quer, insbesondere senkrecht zu der Schwenkachse entlang der Vakuumplatten bewegt. Eine Bewegung der Reinigungs- und Inspektionseinheit senkrecht zu der Schwenkachse ist vorteilhaft, da diese Anordnung eine lineare Bewegung der Reinigungs- und Inspektionseinheit erlaubt und kein Versetzen der Reinigungs- und Inspektionseinheit zwischen einer Bewegung entlang der ersten Vakuumplatte und einer Bewegung entlang der zweiten Vakuumplatte notwendig ist.

In einer Ausgestaltung ist für ein Bewegen, insbesondere ein Verschieben oder Verfahren, ein Schienensystem vorgesehen ist, entlang welchem die Reinigungs- und Inspektionseinheit hin- und herbewegbar ist. Das Schienensystem weist in einer Ausgestaltung zwei Schienen auf, welche entlang zwei einander gegenüberliegender Seiten der ersten Vakuumplatte verlaufen, wobei die Vakuumplatte um eine senkrecht zu den Schienen und parallel zu der Fahrebene verlaufenden Schwenkachse verschwenkbar ist.

Geeignete Reinigungseinrichtungen und/oder Inspektionseinrichtungen sind je nach Anwendungsfall und Beschaffenheit der funktionalen Schicht durch den Fachmann geeignet wählbar. Die Reinigungs- und Inspektionseinheit umfasst in einer Ausgestaltung eine Reinigungswalze und/oder eine Absaugeinrichtung und/oder eine Scanneinrichtung für eine optische Inspektion funktionalen Schicht.

Die Orientierung der Flächen in der Arbeitsposition ist je nach Anwendungsfall durch den Fachmann geeignet wählbar. Für eine einfache Gestaltung der Vorrichtung, ist in einer Ausgestaltung vorgesehen, dass die Oberflächen in der Arbeitsposition nach oben weisen, d.h. dass eine Bearbeitung der ersten Seite und der zweiten Seite der funktionalen Schicht von oben, insbesondere mit einem über die erste Vakuumplatte bzw. über die zweite Vakuumplatte bewegten Reinigungs- und Inspektionseinheit möglich ist.

Für eine einfache Bearbeitung sind die Oberflächen der Vakuumplatten in einer Ebene angeordnet. Dadurch ist eine automatisiere Reinigung und Inspektion der ersten Seite und der zweiten Seite der funktionalen Schicht ohne Versatz der Reinigungs- und Inspektionseinheit senkrecht zu den Vakuumplatten möglich.

Gemäß einem zweiten Aspekt wird ein Verfahren zur Reinigung und/oder Inspektion einer funktionalen Schicht mit einer ersten Seite und einer zweiten Seite mittels einer Reinigungs- und Inspektionseinheit geschaffen, umfassend die Schritte Ablegen der funktionalen Schicht mit der zweiten Seite auf einer Oberfläche einer ersten Vakuumplatte, sodass die erste Seite der funktionalen Schicht für eine Reinigung und/oder Inspektion frei liegt, wobei nach dem Ablegen der funktionalen Schicht an der ersten Vakuumplatte die Reinigungs- und Inspektionseinheit zur Reinigung und/oder Inspektion der ersten Seite der an der ersten Vakuumplatte angeordneten funktionalen Schicht entlang der ersten Vakuumplatte und entlang der zweiten Vakuumplatte in eine erste Richtung in eine Endlage bewegt wird bewegt wird, und Übergeben der funktionalen Schicht an eine zweite Vakuumplatte, wobei die funktionale Schicht mit der ersten Seite auf einer Oberfläche der zweiten Vakuumplatte ablegt wird, sodass die zweite Seite der funktionalen Schicht für eine Reinigung und/oder Inspektion frei liegt, wobei nach der Übergabe der funktionalen Schicht an die zweite Vakuumplatte die Reinigungs- und Inspektionseinheit zur Reinigung und/oder Inspektion der zweiten Seite der an der zweiten Vakuumplatte angeordneten funktionalen Schicht aus der Endlage entlang der zweiten Vakuumplatte und entlang der erstem Vakuumplatte in eine der ersten Richtung entgegengesetzte zweite Richtung bewegt wird, wobei die Oberfläche der ersten Vakuumplatte und die Oberfläche der zweiten Vakuumplatte in einer jeweiligen Arbeitsposition die gleiche Orientierung aufweisen und wobei die erste Vakuumplatte und/oder die zweite Vakuumplatte für eine Übergabe der funktionale Schicht von der ersten Vakuumplatte an die zweite Vakuumplatte derart verschwenkt wird/werden, dass die Oberflächen einander gegenüberliegend angeordnet werden.

Ein Verschwenken der ersten und/oder der zweiten Vakuumplatte erfolgt dabei je nach Ausgestaltung manuell und/oder mittels eines Antriebs.

Die funktionale Schicht wird mittels der Reinigungs- und Inspektionseinheit gereinigt und/oder inspiziert, wobei nach dem Ablegen der funktionalen Schicht an der ersten Vakuumplatte die Reinigungs- und Inspektionseinheit zur Reinigung und/oder Inspektion der ersten Seite der an der ersten Vakuumplatte angeordneten funktionalen Schicht entlang der ersten Vakuumplatte bewegt wird und nach der Übergabe der funktionalen Schicht an die zweite Vakuumplatte die Reinigungs- und Inspektionseinheit zur Reinigung und/oder Inspektion der zweiten Seite der an der zweiten Vakuumplatte angeordneten funktionalen Schicht entlang der zweiten Vakuumplatte bewegt wird. Ein Bewegen der Reinigungs- und Inspektionseinheit erfolgt dabei je nach Ausgestaltung manuell und/oder mittels eines Antriebs.

Erfindungsgemeäß ist vorgesehen, dass die Reinigungs- und Inspektionseinheit vor der Übergabe der funktionalen Schicht entlang der ersten Vakuumplatte und entlang der zweiten Vakuumplatte in eine erste Richtung in eine Endlage bewegt wird und nach der Übergabe der funktionalen Schicht an die zweite Vakuumplatte zur Reinigung und/oder Inspektion der zweiten Seite der an der zweiten Vakuumplatte angeordneten funktionalen Schicht aus der Endlage entlang der zweiten Vakuumplatte in eine der ersten Richtung entgegengesetzte zweite Richtung bewegt wird. Die Reinigungs- und Inspektionseinheit wird in anderen Worten über die zweite Vakuumplatte hinaus bewegt, sodass die zweite Vakuumplatte nicht von der Reinigungs- und Inspektionseinheit verdeckt wird und die erste Vakuumplatte auf die zweite Vakuumplatte verschwenkbar ist und/oder die zweite Vakuumplatte in Richtung der ersten Vakuumplatte verschwenkbar ist.

Die funktionale Schicht wird in einer Ausgestaltung mittels einer Reinigungswalze und/oder einer Absaugeinrichtung gereinigt und/oder mittels einer Scanneinrichtung optisch inspiziert.

In einer Ausgestaltung ist vorgesehen, dass die funktionale Schicht manuell oder automatisiert auf der ersten Vakuumplatte abgelegt und/oder manuell oder automatisiert von der zweiten Vakuumplatte entnommen wird.

### KURZBESCHREIBUNG DER ZEICHNUNGEN

Weitere Vorteile und Aspekte der Erfindung ergeben sich aus den Ansprüchen und aus der Beschreibung eines Ausführungsbeispiels der Erfindung, das nachfolgend anhand der Figuren erläutert ist. Dabei zeigen:
- Fig. 1: ein Ausführungsbeispiel einer Vorrichtung zur Reinigung und/oder Inspektion einer funktionalen Schicht in einer Seitenansicht und
- Fig. 2: die Vorrichtung gemäß Fig. 1 in einer Draufsicht.

### DETAILLIERTE BESCHREIBUNG DER AUSFÜHRUNGSBEISPIELE

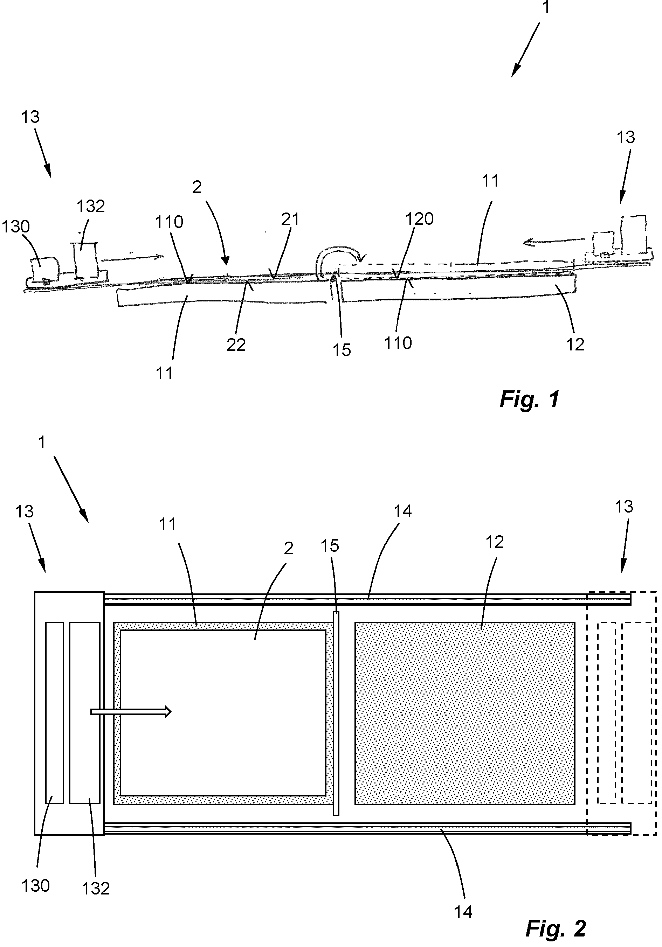

Fig. 1 und 2 zeigen in einer Seitenansicht bzw. einer Draufsicht eine Vorrichtung 1 zur Reinigung und/oder Inspektion einer funktionalen Schicht 2 in Form eines Zuschnitts mit einer ersten Seite 21 und einer zweiten Seite 22.

Die dargestellte Vorrichtung 1 umfasst eine erste Vakuumplatte 11, eine zweite Vakuumplatte 12 und eine linear hin- und herbewegbare Reinigungs- und Inspektionseinheit 13. In dem dargestellten Ausführungsbeispiel ist ein Schienensystem mit zwei Schienen 14 vorgesehen, entlang welcher die Reinigungs- und Inspektionseinheit 13 wie durch Pfeile angedeutet hin- und herbewegbar ist.

Die Vorrichtung 1 umfasst eine Schwenkachse 15, wobei in dem dargestellten Ausführungsbeispiel die erste Vakuumplatte 11 zwischen einer in den Fig. 1 und 2 dargestellten Arbeitsposition und einer in Fig. 1 gestrichelt dargestellten Übergabeposition um die Schwenkachse 15 verschenkbar ist. Die zweite Vakuumplatte 12 ist in dem dargestellten Ausführungsbeispiel stationär in einer dargestellten Arbeitsposition angeordnet.

Die erste Vakuumplatte 11 weist eine Oberfläche 110 auf und die zweite Vakuumplatte 12 weist eine Oberfläche 120 auf, wobei die Oberfläche 110 der ersten Vakuumplatte 11 und die Oberfläche 120 der zweiten Vakuumplatte 12 in der in den Fig. 1 und 2 dargestellten Arbeitsposition die gleiche Orientierung aufweisen. In dem dargestellten Ausführungsbeispiel weisen beide Oberflächen 110, 120 nach oben, d.h. sie sind von oben zugänglich. Die erste Vakuumplatte 11 ist um die Schwenkachse 15 aus der in den Fig. 1 und 2 dargestellten Arbeitsposition in die in Fig. 1 gestrichelt dargestellten Übergabeposition verschenkbar, wobei in Übergabeposition die Oberfläche 110 der ersten Vakuumplatte 11 gegenüberliegend der Oberfläche 120 der zweiten Vakuumplatte 12 angeordnet ist.

Das Schienensystem weist in dem dargestellten Ausführungsbeispiel zwei Schienen 14 auf, welche entlang zwei einander gegenüberliegender Seiten der ersten Vakuumplatte 11 und der zweiten Vakuumplatte 12 verlaufen. Die Schwenkachse 15, um welche die erste Vakuumplatte 11 verschwenkbar ist, ist senkrecht zu den Schienen 14 und parallel zu einer Fahrebene der Reinigungs- und Inspektionseinheit 13 angeordnet.

Die dargestellte Reinigungs- und Inspektionseinheit 13 ist eine kombinierte Reinigungs- und Inspektionseinheit und umfasst eine Reinigungseinrichtung 132 und eine Inspektionseinrichtung 130. In dem dargestellten Ausführungsbeispiel ist die Reinigungseinrichtung 132 in einer ersten Richtung vor der Inspektionseinrichtung 130 angeordnet, in anderen Ausgestaltungen ist eine umgekehrte Anordnung vorgesehen.

In einer vorteilhaften Verwendung ist ein halbautomatisiertes Verfahren vorgesehen, wobei die funktionale Schicht 2 zunächst manuell mit der zweiten Seite 22 auf der Oberfläche 110 der ersten Vakuumplatte 11 abgelegt wird, sodass die erste Seite 21 der funktionalen Schicht 2 für eine Reinigung und/oder Inspektion frei liegt.

Anschließend wird die Reinigungs- und Inspektionseinheit 13 aus der in den Fig. 1 und 2 dargestellten Ausgangslage neben der ersten Vakuumplatte 11 in die in Fig. 1 und 2 durch einen Pfeil dargestellte erste Richtung bewegt. Die Reinigungs- und Inspektionseinheit 13 wird dabei zunächst entlang der ersten Vakuumplatte 11 bewegt, wobei die Reinigungs- und Inspektionseinheit 13 aktiviert ist und die erste Seite 21 der funktionalen Schicht 2 gereinigt und inspiziert wird. Die Reinigungs- und Inspektionseinheit 13 wird anschließend weiter entlang der zweiten Vakuumplatte 12 in die in Fig. 1 und 2 gestichelt dargestellte Endlage bewegt, wobei die Reinigungs- und Inspektionseinheit 13 in einer Ausgestaltung deaktiviert ist.

Nach oder zumindest zeitweise überlappend mit einer Bewegung der Reinigungs- und Inspektionseinheit 13 in die Endlage wird die ersten Vakuumplatte 11 um die Schwenkachse 15 in Richtung der zweiten Vakuumplatte 12 in die Übergabeposition verschwenkt, sodass für eine Übergabe der funktionalen Schicht 2 von der ersten Vakuumplatte 11 an die zweite Vakuumplatte 12 die Oberflächen 110, 120 einander gegenüberliegend angeordnet sind. Ein Verschwenken erfolgt je nach Anwendungsfall automatisiert oder manuell.

In der Übergabeposition erfolgt eine Übergabe der funktionalen Schicht 2 an die zweite Vakuumplatte 12 derart, dass die funktionale Schicht 2 mit der ersten Seite 21 auf der Oberfläche 120 der zweiten Vakuumplatte 12 ablegt wird, sodass die zweite Seite 22 der funktionalen Schicht 2 für eine Reinigung und/oder Inspektion frei liegt.

Die Vakuumplatten 11, 12 sind für eine Übergabe geeignet deaktivierbar und/oder aktivierbar, sodass eine Übergabe auch in einer anderen Ausrichtung als der dargestellten Ausrichtung der Vakuumplatten möglich ist.

Nach der Übergabe der funktionalen Schicht 2 an die zweite Vakuumplatte 12 wird die Reinigungs- und Inspektionseinheit 13 zur Reinigung und/oder Inspektion der zweiten Seite 22 der an der zweiten Vakuumplatte 12 angeordneten funktionalen Schicht 2 entlang der zweiten Vakuumplatte 12 in eine der ersten Richtung entgegengesetzte zweite Richtung bewegt. Die Bewegung in die zweite Richtung erfolgt dabei bis in die in den Fig. 1 und 2 dargestellte Ausgangslage.

Nachdem die Reinigungs- und Inspektionseinheit 13 die zweite Vakuumplatte passiert hat, kann die funktionale Schichte automatisiert oder manuell von der zweiten Vakuumplatte 12 entnommen werden.

In einer Ausgestaltung wird bereits vor der Bewegung der Reinigungs- und Inspektionseinheit 13 in die zweite Richtung in die in den Fig. 1 und 2 dargestellte Ausgangslage an der ersten Vakuumplatte 11 eine weitere funktionale Schicht 2 abgelegt. Je nach Ausgestaltung wird diese Schicht dabei zweifach gereinigt und/oder inspiziert oder die Reinigungs- und Inspektionseinheit 13 teilweise oder ganz deaktiviert. In einer Ausgestaltung ist vorgesehen, dass die an der ersten Vakuumplatte 11 angeordnete funktionale Schicht 2 bei einer Bewegung in die zweite Richtung gereinigt und bei einer Bewegung in die erste Richtung inspiziert wird.

Ebenso ist in einer Ausgestaltung vorgesehen, dass die funktionale Schicht nachdem die Reinigungs- und Inspektionseinheit 13 die zweite Vakuumplatte 12 bei einer Bewegung in die zweite Richtung passiert hat, zunächst an der zweiten Vakuumplatte 12 verbleibt und bei einer erneuten Bewegung der Reinigungs- und Inspektionseinheit 13 in die erste Richtung die Reinigungs- und Inspektionseinheit 13 für eine Reinigung und/oder Inspektion teilweise oder ganz aktiviert ist, wobei die funktionale Schicht 2 erst nach der Bewegung der Reinigungs- und Inspektionseinheit 13 in die Endlage der Vakuumplatte 12 entnommen wird.

In einer anderen Ausgestaltung ist vorgesehen, dass bei einer Bewegung der Reinigungs- und Inspektionseinheit 13 in eine erste Richtung nur die Inspektionseinrichtung 130 aktiviert ist, wobei eine an der ersten Vakuumplatte 11 und eine an der zweiten Vakuumplatte 12 angeordnete funktionale Schicht 2 inspiziert werden. Die an der zweiten Vakuumplatte 12 angeordnete funktionale Schicht 2 wird anschließend entfernt und die an der ersten Vakuumplatte 11 angeordnete Schicht 2 an die zweite Vakuumplatte 12 übergeben. An der ersten Vakuumplatte 11 wird eine weitere funktionale Schicht 2 abgelegt. Bei einer Rückbewegung der Reinigungs- und Inspektionseinheit 13 in der zweiten Richtung ist nur die Reinigungseinrichtung 132 aktiviert ist, wobei die zweite Seite 22 der an der zweiten Vakuumplatte 12 und eine erste Seite 21 der weiteren an der ersten Vakuumplatte 11 angeordneten funktionalen Schicht 2 gereinigt werden. Anschließend wird die Reinigungs- und Inspektionseinheit 13 erneut in die erste Richtung für eine Inspektion der ersten Seite 21 der weiteren an der ersten Vakuumplatte 11 angeordneten funktionalen Schicht 2 und der zweiten Seite 22 der an der zweiten Vakuumplatte 12 angeordneten Schicht bewegt.

## Patentansprüche

1. Vorrichtung zur Reinigung und Inspektion einer funktionalen Schicht (2) in Form eines Zuschnitts mit einer ersten Seite (21) und einer zweiten Seite (22), umfassend
- eine linear hin- und herbewegbare Reinigungs- und Inspektionseinheit (13) zur Reinigung und/oder Inspektion der funktionalen Schicht (2),
- eine erste Vakuumplatte (11), wobei die funktionale Schicht (2) mit der zweiten Seite (22) auf einer Oberfläche (110) der ersten Vakuumplatte (11) anordenbar ist, sodass die erste Seite (21) der funktionalen Schicht (2) für eine Reinigung und/oder Inspektion frei liegt, und
- eine zweite Vakuumplatte (12), wobei die funktionale Schicht (2) mit der ersten Seite (21) auf einer Oberfläche (120) der zweiten Vakuumplatte (12) anordenbar ist, sodass die zweite Seite (22) der funktionalen Schicht (2) für eine Reinigung und/oder Inspektion frei liegt,
wobei die Oberfläche (110) der ersten Vakuumplatte (11) und die Oberfläche (120) der zweiten Vakuumplatte (12) in einer jeweiligen Arbeitsposition die gleiche Orientierung aufweisen,
wobei die erste Vakuumplatte (11) und/oder die zweite Vakuumplatte (12) derart verschwenkbar gelagert ist, dass für einer Übergabe der funktionalen Schicht (2) von der ersten Vakuumplatte (11) an die zweite Vakuumablage (12) die Oberflächen (110, 120) einander gegenüberliegend anordenbar sind, und
wobei die Reinigungs- und Inspektionseinheit (13) zur Reinigung und/oder Inspektion der ersten Seite (21) der an der ersten Vakuumplatte (11) angeordneten funktionalen Schicht (2) in eine erste Richtung entlang der ersten Vakuumplatte (11) und entlang der zweiten Vakuumplatte (12) in eine Endlage und zur Reinigung und/oder Inspektion der zweiten Seite (21) der an der zweiten Vakuumplatte (12) angeordneten funktionalen Schicht (2) aus der Endlage in eine der ersten Richtung entgegengesetzte zweite Richtung entlang der zweiten Vakuumplatte (12) und entlang der erstem Vakuumplatte (11) bewegbar ist.

2. Vorrichtung gemäß Anspruch 1, **dadurch gekennzeichnet, dass** ein Schienensystem vorgesehen ist, entlang welchem die Reinigungs- und/oder Inspektionseinheit (13) hin- und herbewegbar ist, wobei das Schienensystem zwei Schienen (14) aufweist, welche entlang zwei einander gegenüberliegender Seiten der ersten Vakuumplatte (11) und der zweiten Vakuumplatte (12) verlaufen.

3. Vorrichtung gemäß Anspruch 1 oder 2, **dadurch gekennzeichnet, dass** die Reinigungs- und Inspektionseinheit (13) eine Reinigungswalze und/oder eine Absaugeinrichtung und eine Scanneinrichtung für eine optische Inspektion funktionalen Schicht (2) umfasst.

4. Vorrichtung gemäß Anspruch 1, 2 oder 3, **dadurch gekennzeichnet, dass** die Oberflächen (110, 120) in den Arbeitspositionen nach oben weisen und/oder in einer Ebene angeordnet sind.

5. Verfahren zur Reinigung und/oder Inspektion einer funktionalen Schicht (2) mit einer ersten Seite (21) und einer zweiten Seite (22) mittels einer Reinigungs- und Inspektionseinheit (13), umfassend
- Ablegen der funktionalen Schicht (2) mit der zweiten Seite (22) auf einer Oberfläche (110) einer ersten Vakuumplatte (11), sodass die erste Seite (21) der funktionalen Schicht (2) für eine Reinigung und/oder Inspektion frei liegt, wobei nach dem Ablegen der funktionalen Schicht (2) an der ersten Vakuumplatte (11) die Reinigungs- und Inspektionseinheit (13) zur Reinigung und/oder Inspektion der ersten Seite (21) der an der ersten Vakuumplatte (11) angeordneten funktionalen Schicht (2) entlang der ersten Vakuumplatte (11) und entlang der zweiten Vakuumplatte (12) in eine erste Richtung in eine Endlage bewegt wird bewegt wird, und
- Übergeben der funktionalen Schicht (2) an eine zweite Vakuumplatte (12), wobei die funktionale Schicht (2) mit der ersten Seite (21) auf einer Oberfläche (120) der zweiten Vakuumplatte (12) ablegt wird, sodass die zweite Seite (22) der funktionalen Schicht (2) für eine Reinigung und/oder Inspektion frei liegt, wobei nach der Übergabe der funktionalen Schicht (2) an die zweite Vakuumplatte (12) die Reinigungs- und Inspektionseinheit (13) zur Reinigung und/oder Inspektion der zweiten Seite (22) der an der zweiten Vakuumplatte (12) angeordneten funktionalen Schicht (2) aus der Endlage entlang der zweiten Vakuumplatte (12) und entlang der erstem Vakuumplatte (11) in eine der ersten Richtung entgegengesetzte zweite Richtung bewegt wird.
wobei die Oberfläche (110) der ersten Vakuumplatte (11) und die Oberfläche (120) der zweiten Vakuumplatte (12) in einer Arbeitsposition die gleiche Orientierung aufweisen und
wobei die erste Vakuumplatte (11) und/oder die zweite Vakuumplatte (12) für eine Übergabe der funktionalen Schicht (2) von der ersten Vakuumplatte (11) an die zweite Vakuumplatte (12) derart verschwenkt wird, dass die Oberflächen (110, 120) einander gegenüberliegend angeordnet werden.

6. Verfahren gemäß Anspruch 5, **dadurch gekennzeichnet, dass** die funktionale Schicht (2) mittels einer Reinigungswalze und/oder einer Absaugeinrichtung gereinigt und/oder mittels einer Scanneinrichtung optisch inspiziert wird.

7. Verfahren gemäß Anspruch 5 oder 6, **dadurch gekennzeichnet, dass** die funktionale Schicht (2) manuell oder automatisiert auf der ersten Vakuumplatte (11) abgelegt und/oder manuell oder automatisiert von der zweiten Vakuumplatte (12) entnommen wird.

## Claims

1. A device for cleaning and inspecting a functional layer (2) in the form of a blank featuring a first side (21) and a second side (22), comprising
- a cleaning and inspection unit (13), movable back and forth in a linear motion to clean and/or inspect the functional layer (2),
- a first vacuum plate (11), wherein the functional layer (2) is arrangeable with the second side (22) on a surface (110) of the first vacuum plate (11) so that the first side (21) of the functional layer (2) is exposed for cleaning and/or inspection, and
- a second vacuum plate (12), wherein the functional layer (2) is arrangeable with the first side (21) on a surface (120) of the second vacuum plate (12) so that the second side (22) of the functional layer (2) is exposed for cleaning and/or inspection,
wherein the surface (110) of the first vacuum plate (11) and the surface (120) of the second vacuum plate (12) assume the same orientation in their respective working position,
wherein the first vacuum plate (11) and/or the second vacuum plate (12) are mounted in a manner that allows for swivel movement, such that the surfaces (110, 120) are arrangeable opposite one another for transferring the functional layer (2) from the first vacuum plate (11) to the second vacuum plate (12), and
wherein the cleaning and inspection unit (13) is movable in a first direction along the first vacuum plate (11) and along the second vacuum plate (12) to an end position to clean and/or inspect the first side (21) of the functional layer (2) that is arranged on the first vacuum plate (11) and is movable from the end position in a second direction opposite the first direction along the second vacuum plate (12) and the first vacuum plate (11) to clean and/or inspect the second side (21) of the functional layer (2) that is arranged on the second vacuum plate (12).

2. The device according to claim 1, **characterised in that** a rail system is provided along which the cleaning and/or inspection unit (13) is movable back and forth, wherein the rail system has two rails (14) that run along two sides of the first vacuum plate (11) and the second vacuum plate (12) that are opposite to one another.

3. The device according to claim 1 or 2, **characterised in that** the cleaning and inspection unit (13) comprises a cleaning roller and/or a suction device and a scanning unit for optically inspecting the functional layer (2).

4. The device according to claim 1, 2, or 3, **characterised in that** the surfaces (110, 120) face upwards when in the working position and/or are arranged in one plane.

5. A method for cleaning and/or inspecting a functional layer (2) with a first side (21) and a second side (22) using a cleaning and inspection unit (13), comprising
- placing the functional layer (2) with the second side (22) on a surface (110) of a first vacuum plate (11) so that the first side (21) of the functional layer (2) is exposed for cleaning and/or inspecting, wherein after the functional layer (2) has been placed on the first vacuum plate (11), the cleaning and inspection unit (13) is moved along the first vacuum plate (11) and the second vacuum plate (12) in a first direction to an end position to clean and/or inspect the first side (21) of the functional layer (2) that is arranged on the first vacuum plate (11), and
- transferring the functional layer (2) to a second vacuum plate (12), wherein the functional layer (2) is placed with the first side (21) on a surface (120) of the second vacuum plate (12) in such a way that the second side (22) of the functional layer (2) is exposed for cleaning and/or inspecting, wherein after the functional layer (2) has been transferred to the second vacuum plate (12), the cleaning and inspection unit (13) is moved in a second direction opposite the first direction from the end position along the second vacuum plate (12) and the first vacuum plate (11), to clean and/or inspect the second side (22) of the functional layer (2) that is arranged on the second vacuum plate (12).
wherein the surface (110) of the first vacuum plate (11) and the surface (120) of the second vacuum plate (12) assume the same orientation in a working position,
and
wherein the first vacuum plate (11) and/or the second vacuum plate (12) are swivelled in such a way that the surfaces (110, 120) can be arranged opposite one another for the purpose of transferring the functional layer (2) the first vacuum plate (11) to the second vacuum plate (12).

6. A method according to claim 5, **characterised in that** the functional layer (2) is cleaned using a cleaning roller and/or a suction device and/or is optically inspected using a scanning unit.

7. A method according to claim 5 or 6, **characterised in that** the functional layer (2) is manually or automatically placed on the first vacuum plate (11) and/or manually or automatically removed from the second vacuum plate (12).

## Revendications

1. Dispositif de nettoyage et d'inspection d'une couche fonctionnelle (2) sous la forme d'une découpe avec un premier côté (21) et un second côté (22), comprenant
- une unité de nettoyage et d'inspection (13) déplaçable en va-et-vient de manière linéaire, destinée au nettoyage et/ou à l'inspection de la couche fonctionnelle (2),
- une première plaque à vide (11), sachant que la couche fonctionnelle (2) peut être disposée, au niveau de son second côté (22), sur une surface (110) de la première plaque à vide (11) de sorte que le premier côté (21) de la couche fonctionnelle (2) est exposé pour un nettoyage et/ou une inspection, et
- une seconde plaque à vide (12), sachant que la couche fonctionnelle (2) peut être disposée, au niveau de son premier côté (21), sur une surface (120) de la seconde plaque à vide (12) de sorte que le second côté (22) de la couche fonctionnelle (2) est exposé pour un nettoyage et/ou une inspection,
sachant que la surface (110) de la première plaque à vide (11) et la surface (120) de la seconde plaque à vide (12) présentent la même orientation dans une position de travail respective,
sachant que la première plaque à vide (11) et/ou la seconde plaque à vide (12) sont montées de manière pivotante de sorte que pour un transfert de la couche fonctionnelle (2) de la première plaque à vide (11) à la seconde plaque à vide (12), les surfaces (110, 120) peuvent être disposées de manière à être opposées l'une à l'autre, et
sachant que l'unité de nettoyage et d'inspection (13) est déplaçable, pour le nettoyage et/ou l'inspection du premier côté (21) de la couche fonctionnelle (2) disposée sur la première plaque à vide (11), dans une première direction le long de la première plaque à vide (11) et le long de la seconde plaque à vide (12) jusqu'à une position finale et est déplaçable, pour le nettoyage et l'inspection du second côté (21) de la couche fonctionnelle (2) disposée sur la seconde plaque à vide (12), depuis la position finale dans une seconde direction opposée à la première direction le long de la seconde plaque à vide (12) et le long de la première plaque à vide (11).

2. Dispositif selon la revendication 1, **caractérisé en ce qu'**est prévu un système de rail le long duquel l'unité de nettoyage et/ou d'inspection (13) est déplaçable en va-et-vient, sachant que le système de rail présente deux rails (14) qui s'étendent le long de deux côtés opposés de la première plaque à vide (11) et de la seconde plaque à vide (12).

3. Dispositif selon la revendication 1 ou 2, **caractérisé en ce que** l'unité de nettoyage et d'inspection (13) comprend un rouleau de nettoyage et/ou un dispositif d'aspiration et un dispositif de scannage pour une inspection optique de la couche fonctionnelle (2).

4. Dispositif selon la revendication 1, 2 ou 3, **caractérisé en ce que** les surfaces (110, 120) pointent vers le haut dans les positions de travail et/ou sont disposées dans un plan.

5. Procédé de nettoyage et/ou d'inspection d'une couche fonctionnelle (2) avec un premier côté (21) et un second côté (22), au moyen d'une unité de nettoyage et d'inspection (13), comprenant
- le dépôt de la couche fonctionnelle (2), au niveau de son second côté (22), sur une surface (110) d'une première plaque à vide (11) de sorte que le premier côté (21) de la couche fonctionnelle (2) est exposé pour un nettoyage et/ou une inspection, sachant qu'après le dépôt de la couche fonctionnelle (2) sur la première plaque à vide (11), l'unité de nettoyage et d'inspection (13) est déplacée pour le nettoyage et/ou l'inspection du premier côté (21) de la couche fonctionnelle (2) disposée sur la première plaque à vide (11), le long de la première plaque à vide (11) et le long de la seconde plaque à vide (12) dans une première direction jusqu'à une position finale, et
- le transfert de la couche fonctionnelle (2) à une seconde plaque à vide (12), sachant que la couche fonctionnelle (2) est déposée, au niveau de son premier côté (21), sur une surface (120) de la seconde plaque à vide (12) de sorte que le second côté (22) de la couche fonctionnelle (2) est exposé pour un nettoyage et/ou une inspection, sachant qu'après le transfert de la couche fonctionnelle (2) à la seconde plaque à vide (12), l'unité de nettoyage et d'inspection (13) est déplacée pour le nettoyage et/ou l'inspection du second côté (22) de la couche fonctionnelle (2) disposée sur la seconde plaque à vide (12), depuis la position finale le long de la seconde plaque à vide (12) et le long de la première plaque à vide (11) dans une seconde direction opposée à la première position.
sachant que la surface (110) de la première plaque à vide (11) et la surface (120) de la seconde plaque à vide (12) présentent la même orientation dans une position de travail et
sachant que la première plaque à vide (11) et/ou la seconde plaque à vide (12) sont pivotées pour un transfert de la couche fonctionnelle (2) de la première plaque à vide (11) à la seconde plaque à vide (12) de telle sorte que les surfaces (110, 120) sont disposées de manière à être opposées l'une à l'autre.

6. Procédé selon la revendication 5, **caractérisé en ce que** la couche fonctionnelle (2) est nettoyée au moyen d'un rouleau de nettoyage et/ou d'un dispositif d'aspiration et/ou inspectée de manière optique au moyen d'un dispositif de scannage.

7. Procédé selon la revendication 5 ou 6, **caractérisé en ce que** la couche fonctionnelle (2) est déposée manuellement ou de manière automatisée sur la première plaque à vide (11) et/ou retirée manuellement ou de manière automatisée de la seconde plaque à vide (12).
